# FASCICULE DE BREVET EUROPEEN

(11) **EP 0 736 322 B1**
(45) Date de publication et mention de la délivrance du brevet: **18.07.2001**
(21) Numéro de dépôt: 96400583.9
(22) Date de dépôt: 20.03.1996
(51) Int. Cl.: B01F 3/04, C02F 3/20

(54) **Dispositif pour introduire un gaz dans un liquide**
Vorrichtung zum Einbringen eines Gases in eine Flüssigkeit
Apparatus for introducing a gas into a liquid

(30) Priorité: 03.04.1995 FR 9503892
(43) Date de publication de la demande: 09.10.1996
(73) Titulaire: EURODEPOL, 92700 Colombes (FR)
(72) Inventeur: Roland, Jean-Louis Gaston Félix, 92130 Issy-les-Moulineaux (FR)
(74) Mandataire: Armengaud Ainé, Alain

(56) Documents cités:
- EP-A- 0 553 709
- DE-A- 2 544 204
- DE-A- 2 559 234
- DE-A- 2 559 236
- DE-C- 828 100
- FR-A- 2 293 235
- GB-A- 2 000 039
- US-A- 2 743 914
- US-A- 5 160 459

## Description

La présente invention est relative à un dispositif destiné à l'introduction d'un gaz au sein d'une masse liquide statique ou en mouvement en vue d'en réaliser la solution dans ce liquide, ce dispositif étant immergé dans cette masse liquide.

De tels dispositifs, qui se présentent généralement sous la forme de turbines immergées entraînées par un moteur électrique et sous l'hélice desquelles débouche l'extrémité d'une conduite d'admission de gaz, sont utilisés en particulier dans des procédés d'épuration biologique d'effluents ou d'eaux résiduaires où ils servent à effectuer une introduction intense d'air ou d'oxygène dans l'effluent brut, cet oxygène ou cet air assurant une oxydation directe de l'effluent et permettant aux bactéries aérobies de vivre et de se multiplier. Ces mêmes dispositifs peuvent également être appliqués au dégraissage et déshuilage en prétraitement dans les stations d'épuration d'eaux résiduaires, en introduisant de l'air dans la masse de l'eau résiduaire, sous la forme de très fines bulles dispersées, cet air favorisant le rassemblement des graisses et écumes en surface.

On connaît déjà des dispositifs qui permettent d'effectuer simultanément une diffusion gazeuse au sein de la masse liquide à aérer et un brassage de cette même masse liquide, ce brassage pouvant être plus ou moins violent en fonction des conditions d'application et d'utilisation de tels dispositifs.

Les dispositifs connus comportent un moteur d'entraînement, une boîte à vent, une tubulure de prise de gaz et une turbine de diffusion radiale qui est accouplée à une turbine de brassage, ces deux turbines étant immergées dans la masse liquide et le gaz, par exemple de l'air pressurisé ou non, étant amené au centre de la turbine de diffusion et distribué entre les pales de cette dernière.

Un exemple de réalisation de ces dispositifs connus est décrit par FR-A-2 293 235.

US-A-5 160 459 décrit un mélangeur de fluides destiné notamment à l'industrie chimique qui comporte une turbine unique constituée d'un double plateau sur lequel sont implantées des pales rectangulaires, des ailettes internes étant disposées entre les deux plateaux afin de faciliter le flux d'air.

DE-C-0 828 100 décrit un rotor de mélangeur, aspirant dans deux directions axiales et dans lequel les ouvertures d'aspiration débouchent dans la même chambre d'aspiration et dans une chambre de rotor commune aux deux ouvertures. Le rotor comporte des aubes inclinées, de forme curviligne, certaines étant plus courtes que les autres.

Partant de cet état de la technique, la présente invention se propose d'apporter des perfectionnements, notamment dans le but d'améliorer la diffusion en créant des conditions permettant d'obtenir de très fines bulles de gaz avec un rendement optimal des turbines de diffusion et de brassage et en évitant toute obstruction pouvant découler de la présence de particules solides dans la masse liquide à traiter.

En conséquence, cette invention a pour objet un dispositif pour introduire un gaz dans un liquide qui comprend un moteur d'entraînement, une boîte à vent, une tubulure de prise de gaz, une turbine de brassage et une turbine de diffusion radiale accouplée à ladite turbine de brassage, les deux turbines étant immergées dans la masse liquide et le gaz étant amené au centre de la turbine de diffusion et distribué entre les ailettes de cette dernière, ce dispositif étant caractérisé en ce que ladite turbine de diffusion comporte une pluralité d'ailettes radiales se prolongeant jusqu'à l'arbre de la turbine de brassage, alternées avec des ailettes radiales ne se prolongeant pas jusqu'audit arbre afin de laisser un intervalle dégagé entre ledit arbre et les arêtes respectives internes desdites ailettes radiales, ces deux jeux d'ailettes étant fixés sous un plateau entraîné en rotation par ledit arbre, en ce que lesdites ailettes radiales de la turbine de diffusion prolongent latéralement les pales de la turbine de brassage, jusque dans une zone de dépression relative située en arrière de la turbine, et en ce que l'on prévoit des ailettes de décharge, montées au-dessus du plateau recevant, sous sa face inférieure, lesdites ailettes de la turbine de diffusion radiale.

Grâce à l'invention, on favorise la détente du liquide pressurisé et, par conséquent, la diffusion micro-bulles dans la masse liquide. Cette dernière est ainsi plus homogène car elle est prise dans le flux ascendant engendré par les pales de la turbine de brassage prolongées par les ailettes de la turbine de difffusion radiale. Selon l'invention, les deux turbines sont montées sous un plateau hydraulique sur lequel sont montés le moteur, la boîte à vent et la tubulure de prise de gaz.

Selon une autre caractéristique du dispositif objet de l'invention, on prévoit une vanne, notamment à boisseau, placée sur la tubulure de prise de gaz afin de régler le débit de gaz admis dans la turbine.

D'autres caractéristiques et avantages de la présente invention ressortiront de la description faite ci-après d'un exemple de réalisation non limitatif, en référence aux dessins annexés sur lesquels :
- la figure 1 est une vue schématique en coupe selon 1-1 de la figure 2 illustrant un mode de réalisation préféré du dispositif objet de l'invention ;
- la figure 2 est une vue en coupe selon 2-2 de la figure 1 ;
- la figure 3 est une vue partielle représentant uniquement les deux turbines accouplées en une coupe selon 3-3 de la figure 4 ;
- la figure 4 est une vue en plan de la figure 3 et ;
- la figure 5 est une vue en coupe selon 5-5 de la figure 3.

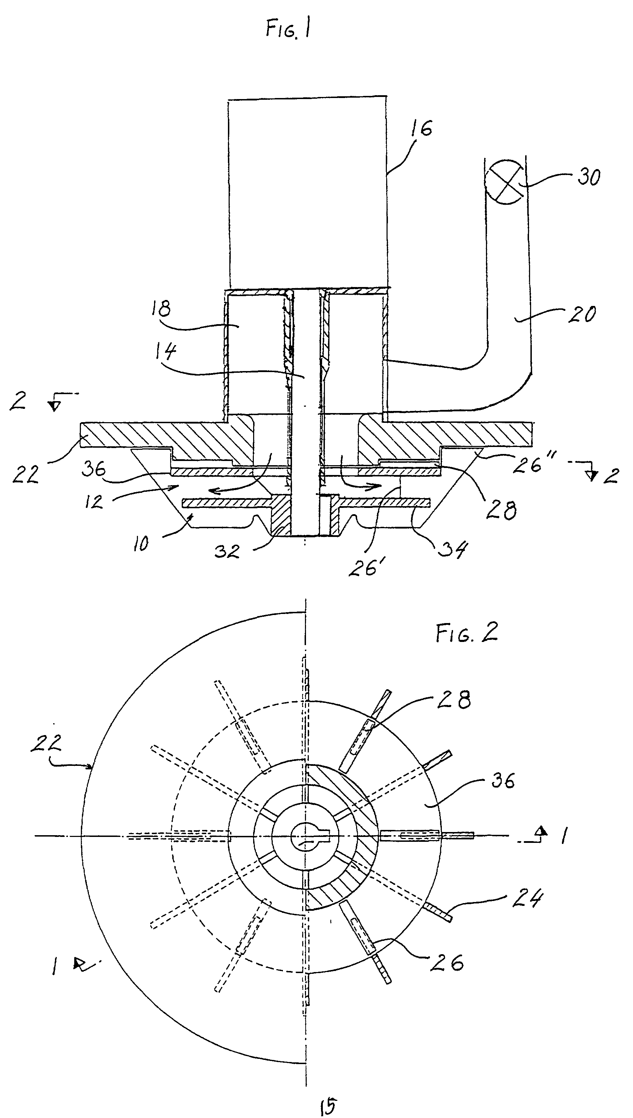

En se référant aux dessins, on voit que le dispositif selon cette invention est du type qui comprend un moteur d'entraînement 16 monté sur une boîte à vent 18 dans laquelle débouche l'extrémité d'une tubulure de prise de gaz 20. Ce moteur entraîne un ensemble de turbines par l'intermédiaire de son arbre de rotation 14. Cet ensemble comporte une turbine de diffusion radiale 12 accouplée à une turbine de brassage 10. Comme on le voit plus particulièrement sur la figure 1, l'ensemble de turbines 10-12 est maintenu par clavetage à l'extrémité de l'arbre 14 dans un moyeu 32. Le gaz, par exemple de l'air pressurisé ou non est amené au centre de la turbine de diffusion 12 entre les ailettes de cette dernière comme l'indiquent les flèches sur la figure 1. L'ensemble de turbines ainsi décrit est immergé au sein de la masse liquide devant être aérée et brassée.

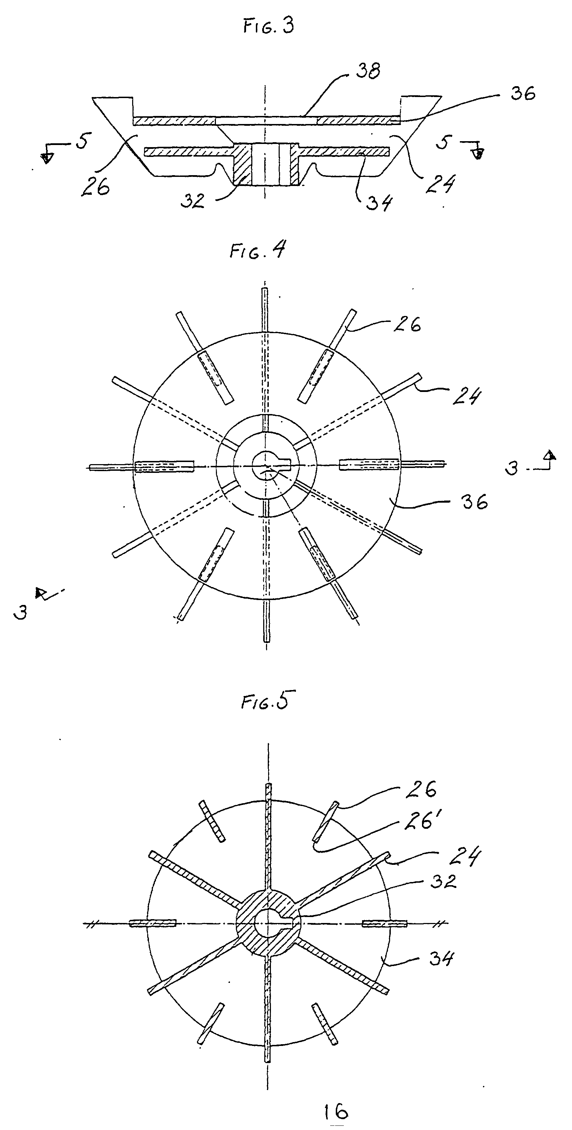

Selon l'invention, la turbine de diffusion radiale 12 comporte deux types d'ailettes régulièrement disposées sous un plateau 36 au centre duquel est ménagée une ouverture 38 pour l'admission du gaz amené par la tubulure 20. Ces ailettes sont les suivantes :
- une pluralité d'ailettes radiales de grande longueur désignées par la référence 24 qui s'étendent depuis le moyeu 32 de l'ensemble des turbines jusqu'à la périphérie de cet ensemble et ;
- une pluralité d'ailettes radiales de longueur plus faible 26 qui ne se prolongent pas jusqu'au moyeu 32 ainsi qu'on peut le voir sur les figures 3 et 4. Ces ailettes 26 sont alternées avec les ailettes 24.

Grâce à cette disposition caractéristique de la présente invention, on laisse un intervalle dégagé entre le moyeu 32 de la turbine et donc, l'arbre 14 du moteur, et les arêtes internes 26' des ailettes 26. Par ailleurs, l'expérience a démontré que le choix de ces deux types d'ailettes permettait d'obtenir la formation de micro-bulles gazeuses à l'extrémité 26" des ailettes, et cela sur une ailette sur deux, par suite de la détente du liquide pressurisé à cet endroit.

Ainsi qu'on le voit clairement sur les figures 1 et 3, les ailettes radiales 24 et 26 de la turbine de diffusion 12 prolongent latéralement les pales de la turbine de brassage 10, jusqu'à une zone de dépression (relative) située en arrière de la turbine. Les pales de la turbine de brassage 10 sont fixées sur un plateau 36 dans lequel est ménagé le moyeu 32 recevant l'extrémité de l'arbre d'entraînement 14. Ainsi, chaque ailette radiale telle que 24 ou 26 et chaque pale de la turbine de brassage 10 présentent une arête commune. Grâce à cette caractéristique, on favorise la détente du liquide pressurisé et par conséquent, la diffusion des micro-bulles au sein de la masse liquide. Cette dernière est donc plus homogène car elle est prise dans le flux ascendant qui est engendré par les pales de la turbine de brassage 10 qui sont prolongées par les ailettes 24, 26 de la turbine de diffusion radiale 12.

La hauteur des pales de la turbine de brassage 10 est choisie en fonction de l'intensité désirée du brassage.

L'ensemble de turbines est monté sous un plateau hydraulique 22 sur lequel sont fixés la boîte à vent 18, le moteur 16 et la tubulure de prise de gaz 20.

Selon l'invention, et pour faciliter le nettoyage des turbines en éliminant les particules qui se déposent à l'arrière de celles-ci, on prévoit des ailettes de décharge telles que 28 (figure 1 et 2) qui sont montées au dessus du plateau 36 sur lequel sont montées, sous sa face inférieure, les deux types d'ailettes radiales 24, 26 de la turbine de diffusion 12.

On sait que la séparation effective solide-liquide et la concentration des matières séparées dépendent du dégagement suffisant des bulles d'air par rapport aux matières solides. Lors d'une application du dispositif selon l'invention à la séparation solide-liquide, il est donc indispensable de maintenir la turbine à son point de rendement optimal en fonction de son immersion afin d'obtenir ce dégagement optimal des bulles d'air. Selon la présente invention, on prévoit, dans ce but, une vanne, notamment à boisseau 30, placée sur la tubulure de prise de gaz 20 afin de permettre un réglage du volume d'air admis dans le dispositif, permettant ainsi un réglage empirique du rapport air/solide, c'est-à-dire du poids d'air dégagé (en kilos) par kilogramme de matières en suspension.

On notera que l'alimentation en gaz, par exemple en air ou en oxygène peut être effectuée par l'intermédiaire d'un compresseur alimentant la tubulure de prise de gaz 20, dans le cas où de gros débits sont nécessaires. On soulignera que cette caractéristique apporte une grande souplesse car elle permet d'utiliser simultanément le compresseur et les turbines lors des périodes de pointe et les turbines seulement en dehors de telles périodes.

On comprend de la lecture de la description qui précède que le dispositif objet de l'invention permet d'effectuer simultanément une oxygénation par diffusion de bulles d'air ou d'oxygène très fines au-travers d'une masse liquide et un brassage homogène de cette masse.

Le dispositif selon l'invention peut être appliqué au dégraissage et au déshuilage d'effluents résiduaires. Il est alors immergé dans la masse liquide de manière que l'air libéré dans cette masse, sous la forme de très fines bulles dispersées au sein de la masse liquide, favorise la mise en flottation des graisses et écumes en surface ; le dispositif présente alors l'avantage de permettre en outre un brassage du fond sans agitation de la surface susceptible de perturber la pellicule ou la couche de matières en flottation.

Le dispositif selon l'invention peut être également mis en oeuvre dans une installation de traitement biologique des eaux par boues activées. Il est immergé dans la masse liquide et alimenté de préféfence en air (ou en oxygène) surpressé. II permet alors d'assurer simultanément une oxygénation de l'effluent permettant aux bactéries aérobies de vivre et de se multiplier, grâce à la formation de fines bulles d'air (ou d'oxygène) au sein de la masse liquide et un brassage de cette même masse liquide permettant de maintenir la boue activée en suspension et d'assurer l'homogénéité du mélange.

Il demeure bien entendu que la présente invention n'est pas limitée aux exemples de réalisation et d'application mentionnés ci-dessus mais qu'elle en englobe toutes les variantes.

## Revendications

1. Dispositif pour introduire un gaz dans un liquide qui comprend un moteur d'entraînement (16), une boîte à vent (18), une tubulure de prise de gaz (20), une turbine de brassage (10) et une turbine de diffusion radiale (12) accouplée à ladite turbine de brassage, les deux turbines étant immergées dans la masse liquide et le gaz étant amené au centre de la turbine de diffusion et distribué entre les ailettes de cette dernière, ce dispositif étant caractérisé en ce que ladite turbine de diffusion (12) comporte une pluralité d'ailettes radiales (24) de grande longueur se prolongeant jusqu'à l'arbre (14) de la turbine de brassage, alternées avec des ailettes radiales (26) de longueur plus faible ne se prolongeant pas jusqu'audit arbre (14) afin de laisser un intervalle dégagé entre ledit arbre et les arêtes respectives internes (26') desdites ailettes radiales (26), ces deux jeux d'ailettes (24, 26) étant fixés sous un plateau (36) entraîné en rotation par ledit arbre, en ce que lesdites ailettes radiales (24-26) de la turbine de diffusion (12) prolongent latéralement les pales de la turbine de brassage (10), jusque dans une zone de dépression relative située en arrière de la turbine, et en ce que l'on prévoit des ailettes de décharge (28), montées au-dessus du plateau (36) recevant, sous sa face inférieure, lesdites ailettes (24, 26) de la turbine de diffusion radiale (12).

2. Dispositif selon la revendication 1 caractérisé en ce que les deux turbines (10, 12) sont montées sous un plateau hydraulique (22), sur lequel sont montés le moteur d'entraînement (16) la boîte à vent (18) et la tubulure de prise de gaz (20).

3. Dispositif selon l'une quelconque des revendications précédentes caractérisé en ce que l'on prévoit une vanne (30), notamment à boisseau, placée sur la tubulure de prise de gaz (20) afin de régler le débit de gaz admis dans la turbine.

4. Dispositif selon l'une quelconque des revendications précédentes caractérisé en ce que la hauteur des pales de la turbine de brassage (10) est déterminée en fonction de l'intensité désirée du brassage.

5. Dispositif selon l'une quelconque des revendications précédentes caractérisé en ce que l'alimentation en gaz s'effectue par l'intermédiaire d'un compresseur alimentant la tubulure de prise de gaz (20).

6. Application du dispositif selon l'une quelconque des revendications précédentes au dégraissage et au déshuilage d'effluents résiduaires, le dispositif étant immergé dans la masse liquide de manière que l'air libéré dans cette masse sous la forme de très fines bulles dispersées au sein de la masse liquide, favorise le rassemblement des graisses et écumes en surface.

7. Application du dispositif selon l'une quelconque des revendications 1 à 6 au traitement biologique des eaux par boues activées, le dispositif étant immergé dans la masse liquide et alimenté de préférence en air surpressé, de façon à assurer simultanément une oxygénation de l'effluent par entraînement de bulles d'air au sein de la masse liquide et un brassage de cette masse liquide pour le maintien en suspension de la boue activée et assurer l'homogénéité du mélange.

## Claims

1. Apparatus for introducing a gas into a liquid which comprises a drive motor (16), an air-chamber (18), a gas intake pipe (20), a mixing turbine (10) and a radial diffusion turbine (12) connected to said mixing turbine, the two turbines being immersed in the liquid mass and the gas being brought to the centre of the diffusion turbine and distributed between the vanes thereof, this apparatus being characterised in that said diffusion turbine (12) comprises a plurality of very long radial vanes (24) extending to the shaft (14) of the mixing turbine, alternating with radial vanes (26) of shorter length not extending to said shaft (14) in order to leave a clear gap between said shaft and the respective internal edges (26') of said radial vanes (26), these two sets of vanes (24, 26) being fixed beneath a plate (36) rotated by said shaft, in that said radial vanes (24 to 26) of the diffusion turbine (12) laterally extend the blades of the mixing turbine (10) into a zone of relative low-pressure located behind the turbine, and in that discharge vanes (28) are provided, mounted on top of the plate (36) receiving beneath its lower face, said vanes (24, 26) of the radial diffusion turbine (12).

2. Apparatus according to claim 1, characterised in that the two turbines (10, 12) are mounted beneath a hydraulic plate (22), on which are mounted the drive motor (16), the air-chamber (18) and the gas intake pipe (20).

3. Apparatus according to any of the preceding claims, characterised in that a valve (30) is provided, in particular a plug valve, located on the gas intake pipe (20) for regulating the throughput of gas admitted into the turbine.

4. Apparatus according to any of the preceding claims, characterised in that the height of the blades of the mixing turbine (10) is determined as a function of the desired intensity of mixing.

5. Apparatus according to any of the preceding claims, characterised in that the gas is supplied via a compressor supplying the gas intake pipe (20).

6. Application of the apparatus according to any of the preceding claims for degreasing and de-oiling waste effluents, the apparatus being immersed in the liquid mass in such a way that the air released in this mass in the form of very fine bubbles dispersed within the liquid mass encourages the collection of grease and scum on the surface.

7. Application of the apparatus according to any of claims 1 to 6 for biologically treating water with activated sludge, the apparatus being immersed in the liquid mass and preferably supplied with compressed air, to simultaneously ensure that the effluent is oxygenated by driving bubbles of air within the liquid mass and that this liquid mass is mixed to keep the activated sludge in suspension and ensure the homogeneity of the mixture.

## Patentansprüche

1. Vorrichtung zum Einleiten eines Gases in eine Flüssigkeit, welche einen Antriebsmotor (16), ein Gasgehäuse (18), ein Gaseinlassrohr (20), einen Mischungsrührer (10) und einen radialen Diffusionsrührer (12), der an den Mischungsrührer gekoppelt ist, umfasst, wobei die beiden Rührer in die flüssige Masse eintauchen und das Gas in die Mitte des Diffusionsrührers gebracht und zwischen dessen Flügeln verteilt wird, **dadurch gekennzeichnet**, **dass** der Diffusionsrührer (12) eine Vielzahl radialer Flügel (24) mit großer Länge enthält, die bis zur Welle (14) des Mischungsrührers reichen und sich mit radialen Flügeln (26) mit kürzerer Länge abwechseln, die nicht bis zur Welle (14) reichen, um einen freien Zwischenraum zwischen dieser Welle und den jeweiligen Innenkanten (26') der radialen Flügel (26) zu lassen, wobei die beiden Sätze von Flügeln (24, 26) unter einer Platte (36) befestigt sind, die von der Welle in Umdrehung versetzt wird, **und dass** die radialen Flügel (24, 26) des Diffusionsrührers (12) die Schaufelblätter des Mischungsrührers (10) bis in eine Zone mit relativem Unterdruck seitlich verlängern, die sich hinter dem Rührer befindet, **und** Entnahmeflügel (28) vorgesehen werden, die über der Platte (36) angebracht sind, die an ihrer Unterseite die Flügel (24, 26) des radialen Diffusionsrührers (12) aufnimmt.

2. Vorrichtung nach Anspruch 1, **dadurch gekennzeichnet**, **dass** die beiden Rührer (10, 12) unter einer Hydraulikplattform (22) angebracht sind, auf welcher der Antriebsmotor (16), das Gasgehäuse (18) und das Gaseinlassrohr (20) befestigt sind.

3. Vorrichtung nach einem der vorhergehenden Ansprüche, **dadurch gekennzeichnet**, **dass** ein im Gaseinlassrohr (20) angeordnetes Ventil (30), insbesondere ein Kegelventil, vorgesehen ist, um den eingeleiteten Gasdurchfluss in den Rührer zu regeln.

4. Vorrichtung nach einem der vorhergehenden Ansprüche, **dadurch gekennzeichnet, dass** die Höhe der Schaufelblätter des Mischungsrührers (10) in Abhängigkeit von der gewünschten Stärke der Durchmischung festgelegt wird.

5. Vorrichtung nach einem der vorhergehenden Ansprüche, **dadurch gekennzeichnet, dass** die Gaszuleitung über einen Verdichter erfolgt, der in das Gaseinlassrohr (20) abgibt.

6. Verwendung der Vorrichtung nach einem der vorhergehenden Ansprüche zum Abscheiden von Fett und Öl aus Abflüssen, wobei die Vorrichtung in die flüssige Masse derart eintaucht, dass die in Form von in der flüssigen Masse dispergierten sehr feinen Bläschen in diese Masse freigesetzte Luft die Ansammlung von Fett und Schaum an der Oberfläche begünstigt.

7. Verwendung der Vorrichtung nach einem der Ansprüche 1 bis 6 zur biologischen Behandlung von Wasser durch Belebtschlamm, wobei die Vorrichtung in die flüssige Masse eintaucht und vorzugsweise Druckluft derart einleitet, dass gleichzeitig für eine Oxidation des Abflusses durch Durchperlen von Luftbläschen durch die flüssige Masse und eine Durchmischung dieser flüssigen Masse gesorgt wird, damit der Belebtschlamm suspendiert und die Homogenität des Gemischs sichergestellt bleibt.
